# EUROPÄISCHE PATENTSCHRIFT

(11) **EP 1 185 392 B1**
(45) Veröffentlichungstag und Bekanntmachung des Hinweises auf die Patenterteilung: **05.03.2003**
(21) Anmeldenummer: 00938681.4
(22) Anmeldetag: 25.05.2000
(51) Int. Cl.: B23D 1/00

(54) **SCHNEIDEINSATZ FÜR NOCKENWELLENFRÄSER UND SCHEIBENFRÄSER HIERFÜR**
CUTTING INSERT FOR CAMSHAFT MILLING CUTTER AND CORRESPONDING SIDE MILLING CUTTER
PLAQUETTE DE COUPE POUR FRAISE D'USINAGE D'ARBRES A CAMES, ET FRAISE EN DISQUE CORRESPONDANTE

(30) Priorität: 16.06.1999 DE 19927545
(43) Veröffentlichungstag der Anmeldung: 13.03.2002
(73) Patentinhaber: SANDVIK AKTIEBOLAG, 811 81 Sandviken (SE)
(72) Erfinder: WERMEISTER, Günter, D-40667 Meerbusch (DE); GÖTZ-WERNER, Heinz, SE - 802 88 Gävle (SE)
(74) Vertreter: Weber, Dieter, Dr.
(86) Internationale Anmeldenummer: EP0004757
(87) Internationale Veröffentlichungsnummer: WO00076707

(56) Entgegenhaltungen:
- WO-A-99/28073

## Beschreibung

Die vorliegende Erfindung betrifft einen Schneideinsatz für Nockenwellenfräser gemäß Oberbegriff von Patentanspruch 1 und einen entsprechenden Scheibenfräser zum Nockenwellenfräsen gemäß Oberbegriff von Patentanspruch 10. Im Stand der Technik sind bereits entsprechende Schneideinsätze bekannt, die aus einem im wesentlichen quaderförmigen Schneidkörper mit einer oberen Fläche und einer hierzu im wesentlichen parallelen unteren Fläche bestehen und die Seitenflächen und Schneidkanten aufweisen, welche entlang der Schnittlinien dieser Seitenflächen mit der Oberseite und/oder der Unterseite gebildet werden.

Diese Schneideinsätze können in der Draufsicht quadratisch oder auch allgemein rechteckig sein. Wenn gegenüberliegende Seitenflächen solcher Schneideinsätze im wesentlichen parallel zueinander verlaufen, so hat man aufgrund der Notwendigkeit einer Freifläche hinter der Schneidkante im allgemeinen einen negativen Spanwinkel. Derartige Schneideinsätze oder Schneidplatten werden daher auch kurz "negative Schneideinsätze" genannt.

Wenn die obere Fläche kleiner ist als die untere Fläche oder umgekehrt, kann am Übergang der dann entsprechend geneigten Seitenflächen zu der jeweils größeren der oberen oder unteren Flächen eine Schneidkante mit positiver Schneidgeometrie ausgebildet werden. Die Schneideinsätze gemäß der vorliegenden Erfindung können sowohl positive wie negative Schneidplatten bzw. Schneideinsätze sein.

Besonders umfangreich werden solche rechteckigen oder vorzugsweise quadratischen Schneidplatten an Fräsmesserköpfen für das Fräsen von Kurbelwellen und Nockenwellen verwendet. Hierzu werden entsprechende Schneideinsätze entlang des Umfanges eines zylindrischen Hauptteiles eines Scheibenfräsers angeordnet und ein solcher Scheibenfräser wird dann in Rotation um seine Achse versetzt und in radialer Richtung auf eine Kurbelwelle oder Nockenwelle zu gestellt, die gegebenenfalls auch um eine Längsachse in Drehung versetzt werden kann, so daß aus einer zunächst dickeren, massiven Metallwelle in einzelnen Bereichen breite Nuten herausgefräst und die verbleibenden Abschnitte profiliert werden, so daß insgesamt ein gewünschtes Profil einer Nokkenwelle oder auch einer Kurbelwelle erzeugt wird.

Dabei tritt insbesondere bei Nockenwellen eine spezielle Profilform sehr regelmäßig auf, die zwischen zwei im Abstand zueinander gelegenen Nuten an einem Nocken ausgebildet ist, der auch in Form eines exzentrisch versetzten, zylindrischen Abschnittes vorliegen kann. Dieses Profil ist gekennzeichnet durch Abschrägung bzw. Abfasung der Kanten, wobei an eine dieser Abfasungen nochmals ein zylindrischer Abschnitt mit geringfügig kleinerem Durchmesser ansetzt.

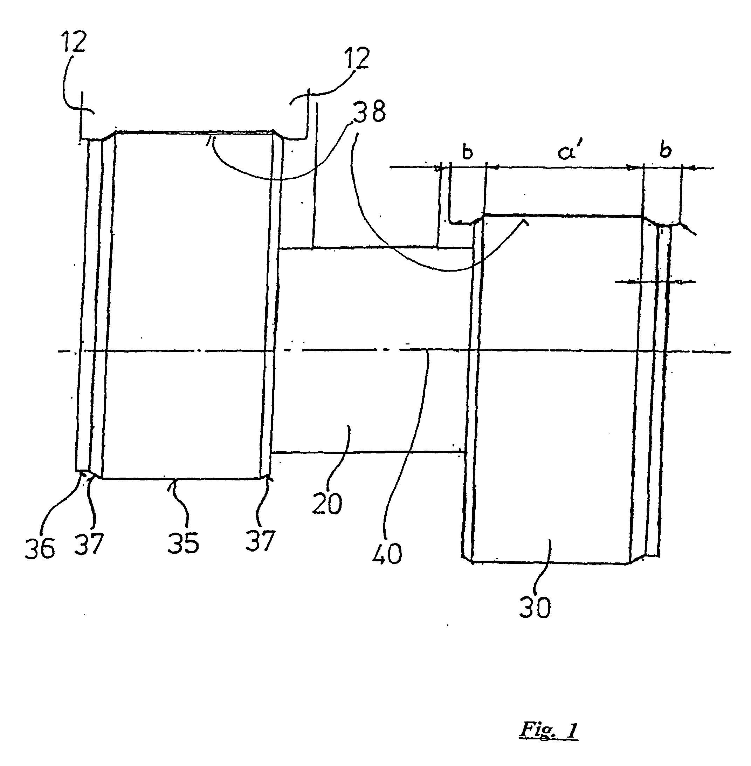

Ein solches Profil ist an dem Abschnitt einer Nockenwelle erkennbar, wie er in Figur 1 unter der Bezugsziffer 30 für zwei zylindrische, nicht koaxiale Abschnitte einer Nockenwelle dargestellt ist.

Dabei müssen diese Abschnitte nicht notwendigerweise zylindrisch sein, sondern sie können eine im Prinzip beliebige Nockenkontur haben, die von einer Kreisform abweicht, die jedoch in der in Figur 1 dargestellten Ansicht nicht sichtbar ist.

Das Herstellen entsprechender Profile ist mit dem im Stand der Technik bekannten Schneideinsätzen und Fräsmesserköpfen relativ aufwendig und zur Herstellung eines Profils entsprechend dem Profil des Nockens 30 in Figur 1 werden herkömmlicherweise Fräsmesserköpfe mit zwei versetzten Reihen von Schneideinsätzen verwendet, um den zylindrischen Abschnitt herzustellen und für die Herstellung der Abfasungen bzw. Abschrägungen und des kurzen zylindrischen Ansatzes wurden zwei weitere Einsätze verwendet. Daher müssen, wenn solche Profile in einem Zug hergestellt werden sollten, Aufnahmeeinrichtungen für vier verschiedene Reihen von Schneideinsätzen entlang des Umfanges eines Scheibenfräsers vorgesehen werden, der die Grundform einer Zylinderscheibe hat. Wenn dazu nicht auch noch verschiedene Typen von Schneideinsätzen verwendet werden sollen, so müssen an einem solchen Scheibenfräser vier unterschiedliche und vor allen unterschiedlich orientierte Reihen von Aufnahmetaschen für entsprechende Schneideinsätze vorgesehen werden. Da außerdem die Schneidbereiche solcher Schneideinsätze notwendigerweise überlappen müssen, um das gesamte Profil abzudecken, müssen all diese verschiedenen Schneideinsatzaufnahmen in Umfangsrichtung entlang des Außenumfanges eines Scheibenfräsers gegeneinander versetzt sein, was wiederum dazu führt, daß die Schneideinsätze, die ein und denselben Abschnitt des Profils herstellen sollen, relativ große Abstände zueinander haben müssen. Dies reduziert die Leistungsfähigkeit und Effizienz entsprechender Fräser. Alternativ könnten die verschiedenen Profitabschnitte in mehreren Arbeitsgängen mit verschiedenen Fräsmesserköpfen hergestellt werden, was allerdings der Effektivität der Herstellung abträglich ist.

Gegenüber diesem Stand der Technik liegt der vorliegenden Erfindung die Aufgabe zugrunde, einen Schneideinsatz und einen entsprechenden Scheibenfräser zu schaffen, die einfacher herstellbar sind und durch deren Verwendung Nockenprofile mit geradem, achsparallelem (zum Beispiel zylindrischem) Hauptabschnitt, Abfasungen an den Kanten und/oder ein- oder beidseitig mit geringerem Durchmesser vorgesehenen Ansätzen mit größerer Effizienz herstellen können.

Hinsichtlich des Schneideinsatzes wird diese Aufgabe dadurch gelöst, daß die obere Fläche und/oder die untere Fläche an diagonal gegenüberliegenden Ecken erhabene Eckbereiche aufweisen, die über die Ebene der oberen bzw. unteren Fläche hervorstehen und sich bis zu den Seitenflächen erstrecken, so daß die Schneidkanten mindestens teilweise durch die Schnittlinien der Seitenflächen mit der Fläche der erhabenen Eckbereiche gebildet werden.

Im übrigen wird der verbleibende Teil der Schneidkanten in herkömmlicher Weise durch die Schnittlinie zwischen einer oberen Fläche oder unteren Fläche mit den jeweiligen Seitenflächen gebildet. Die Schneidkante besteht daher aus zwei in Richtung der Dicke des Schneideinsatzes (Dicke = Abstand zwischen oberer und unterer Fläche) versetzten Schneidkantenbereichen mit einem im Prinzip beliebigen Übergangsbereich dazwischen.

Will man Abfasungen bzw. Abschrägungen von Kanten an dem Nockenprofit erzeugen, so sollte der Übergangsbereich die entsprechende Neigung der Abfasungsfläche haben.

Ein solcher Schneideinsatz kann am Umfang eines Scheibenfräsers derart angeordnet werden, daß, abgesehen von der Verkippung um einen einzustellenden Freiwinkel, die obere bzw. die untere Fläche parallel zu einer Ebene liegen, die senkrecht zu einem zu dem Schneideinsatz weisenden Radiusvektor des zylindrischen Scheibenfräsers verläuft. Dies bedeutet, daß der Schneidkantenabschnitt, der in dem erhabenen Eckbereich eines Schneideinsatzes gebildet wird, einen etwas größeren Abstand von der Zylinderachse des Scheibenfräsers hat als der übrige Teil, der zwischen der oberen bzw. unteren Fläche und der Seitenfläche gebildet wird, wobei zumindest der letztgenannte Schneidkantenabschnitt parallel zur Achse des Scheibenfräsers verläuft.

Der Übergang zwischen dem Schneidkantenabschnitt im erhabenen Bereich und dem übrigen Bereich der Schneidplatte überbrückt diesen unterschiedlichen radialen Abstand von der Zylinderachse des Scheibenfräsers und er erzeugt damit beim Frasen eines Nockenwellenprofils den abgeschrägten Abschnitt im Kantenbereich eines Nockens

Wenn, wie in der bevorzugten Ausführungsform der Erfindung vorgesehen, die erfindungsgemäßen Schneideinsätze bezüglich einer Diagonalen (in der Draufsicht auf die obere oder untere Fläche) spiegelsymmetrisch ausgebildet sind, vorzugsweise spiegelsymmetrisch bezüglich beider Diagonalen, so sind die von dem erhabenen Bereich gebildeten Schneidkantenabschnitte entlang benachbarter Seitenflächen jeweils gleich lang und auch die Übergangsbereiche sind jeweils gleich lang und mit gleicher Neigung ausgebildet. Dies bedeutet, daß bei einer Verdrehung des Schneideinsatzes um 90° um eine Achse senkrecht zur oberen und unteren Fläche, die relative Anordnung des erhabenen Bereichs und des übrigen Schneidkantenabschnittes lediglich vertauscht und dementsprechend ein spiegelbildliches Profil erzeugt wird. Man kann also allein durch Drehen des Schneideinsatzes um 90° ein und denselben Schneideinsatz sowohl für das rechte Kanten- bzw. Abfasungsprofil als auch für das linke Kanten- bzw. Abfasungsprofil eines Nockens verwenden. Wenn der erhabene Bereich eine Oberfläche hat, die im wesentlichen parallel zu der oberen bzw. unteren Fläche des Schneideinsatzes verläuft, so wird durch den daran vorgesehenen Schneidkantenabschnitt ein Abschnitt der Nockenfläche gebildet, die parallel zu der Hauptfläche des Nokkens ist, jedoch einen geringeren Radius aufweist, also zum Beispiel den Radius des kurzen zylindrischen Ansatzes 36 in Figur 1.

Vorzugsweise werden entlang der beiden Kanten eines zylinderscheibenförmigen Fräswerkzeuges in versetzt zueinander angeordneten Aufnahmetaschen die erfindungsgemäßen Schneideinsätze derart angeordnet, daß die erhabenen Bereiche jeweils die radial äußeren und auch axial am weitesten außen liegenden Teile des Fräswerkzeuges bilden. Damit ergibt sich insgesamt ein Profil wie es oben rechts in Figur 1 als das Nockenprofil überragendes Schneidprofil 38 dargestellt ist. Bei dieser Anordnung der Schneideinsätze wirken im übrigen die jeweils an eine Schneidkante angrenzenden Seitenflächen als Spanflächen, im Gegensatz zur herkömmlichen Verwendung entsprechender Schneideinsätze, bei welchen jeweils Oberseite und Unterseite als Spanflächen ausgebildet sind.

Wenn die erhabenen Eckbereiche an Oberseite und Unterseite des Schneideinsatzes ausgebildet sind, so stehen an jedem Schneideinsatz insgesamt acht nutzbare Schneidkanten zur Verfügung, die durch Drehen der Schneideinsätze um 180° um eine senkrecht zur oberen und unteren Fläche verlaufende Achse oder um eine senkrecht zu zwei Seitenflächen verlaufende Achse in ihre aktive Schneidposition gebracht werden können, wodurch zunächst vier dieser Schneidkanten verwendbar sind und schließlich können die Schneideinsätze, nach einer Drehung um 90° um die ersterwähnte Achse, entlang der einen Kante des zylinderscheibenförmigen Scheibenfräsers noch gegen diejenigen der anderen Kante ausgetauscht werden, wobei dann auch die vier verbleibenden Schneidkanten nacheinander durch entsprechendes Drehen in die aktive Position gebracht werden können.

Wie man sieht, kann dadurch ein einziger Typ eines Schneideinsatzes verwendet und in sehr effektiver Weise ausgenutzt werden, da jeder dieser Schneideinsätze acht nutzbare Schneidkanten hat. Wenn man jedoch die Schneidkanten nur am Übergang der Seitenflächen zu der oberen Fläche vorsehen will, so stehen immer noch vier Schneidkanten durch Wenden bzw. Austauschen der Schneideinsätze zur Verfügung, die in ihrer Gesamtheit immer das gewünschte Profil bilden.

Wenn man sich auf Schneidkanten entlang des Umfanges der oberen Fläche (und der zugehörigen Eckbereiche) beschränkt, so kann man dem Schneideinsatz auch eine positive Schneidgeometrie mitgeben, indem die Seitenflächen unter Bildung einer Pyramidenstumpf-Form geneigt werden. Trotz Einhaltens eines entsprechenden Freiwinkets ist dann die Ausbildung eines positiven Spanwinkels an der Schneidkante möglich.

Es versteht sich, daß die Breite eines entsprechenden Scheibenfräsers auf die Gesamtlänge der Schneidkanten der entsprechenden Schneideinsätze abgestimmt ist, so daß diese Schneidkanten der zwei verschiedenen Reihen von Schneideinsätzen, die entlang der jeweiligen Kanten eines zylinderscheibenförmigen Fräskörpers angeordnet sind, einander in axialer Richtung überlappen, so daß das gesamte, in Figur 1 dargestellte Profil eines Nockens hergestellt werden kann.

Es versteht sich jedoch, daß durch unterschiedliche Ausformung der erhabenen Bereiche, zum Beispiel nicht als ebene und zur oberen bzw. unteren Fläche parallele Fläche, auch die Herstellung anderer Profilformen ermöglicht als sie in den Figuren dargestellt sind.

Des weiteren versteht es sich, daß die Größe der Schneideinsätze bzw. die Länge der jeweiligen Schneidkanten und die entsprechende Breite des Scheibenfräsers auf das speziell herzustellende Profil abgestimmt sind. Dabei ist es aber durchaus möglich, durch Verwendung von Fräsmesserköpfen unterschiedlicher Breite bzw. durch unterschiedliche Tiefe entsprechender Aufnahmetaschen für die Schneideinsätze mit ein und demselben Typ und ein und derselben Größe von Schneideinsätzen dasselbe Nockenprofil in unterschiedlichen Breiten (bzw. unterschiedlicher axialer Länge) herzustellen. Insbesondere können die Schneideinsätze axial verstellbar (bei Bedarf auch radial verstellbar oder um kleine Winkel verdrehbar) an dem Scheibenfräser befestigt sein.

Zweckmäßigerweise sind die Aufnahmeeinrichtungen bzw. die Aufnahmetaschen an einem Scheibenfräser zur Aufnahme eines grundsätzlich quaderförmigen Schneideinsatzkörpers ausgebildet, d.h. sie weisen im wesentlichen drei zueinander senkrechte Stützflächen auf, von denen ein Stützfläche (abgesehen von einem einzustellenden Freiwinkel) im wesentlichen senkrecht zu einem zu dieser Aufnahmetasche weisenden Radiusvektor des Scheibenfräsers angeordnet ist, eine Wand dieser Aufnahmetasche in einer Ebene im wesentlichen senkrecht zur Achse des Scheibenfräsers liegt und die dritte (wiederum abgesehen von der Verkippung zur Erzeugung eines Freiwinkels) in etwa parallel zu einer Ebene liegt, die durch die Achse und den zu der Aufnahmetasche weisenden Radiusvektor aufgespannt wird.

Dabei sollte zumindest bei Verwendung von doppelseitigen Schneideinsätzen, d.h. Schneideinsätzen, die Schneidkanten am Übergang der Seitenflächen sowohl zur oberen Fläche als auch zur unteren Fläche hin aufweisen, mindestens die in etwas zum Radiusvektor senkrechte Anlagefläche eine Aussparung zur Aufnahme des erhabenen Eckbereichs eines Schneideinsatzes haben. Dies ermöglicht es, daß der Schneideinsatz im übrigen großflächig an den Flächen entsprechender Aufnahmetaschen anliegt und daß die erhabenen Bereiche und die daran vorgesehenen Schneidkanten in ihrer nicht aktiven Position innerhalb der Aufnahmetaschen nicht belastet werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen Abschnitt einer Nockenwelle mit zwei zylindrischen, nicht konzentrischen Nokken mit einem bestimmten Nockenprofil,
- Figur 2: eine erste Ausführungsform eines Schneideinsatzes mit vier negativen Schneidkanten in verschiedenen Ansichten,
- Figur 3: einen Schneideinsatz ähnlich Figur 2, jedoch mit positiven Schneidkanten,
- Figur 4: verschiedene Ansichten eines doppelseitigen Schneideinsatzes mit insgesamt acht nutzbaren Schneidkanten,
- Figur 5: eine schematische, perspektivische Ansicht des Schneideinsatzes nach Figur 4,
- Figur 6: einen Ausschnitt aus einem Scheibenfräser mit mehreren daran angeordneten und in entsprechenden Aussparungen aufgenommenen Schneideinsätzen nach Figur 4, und
- Figur 7: eine perspektivische Ansicht zweier Aufnahmetaschen eines Scheibenfräsers für Schneideinsätze nach Figur 4 und 5.

Man erkennt in Figur 1 einen mehr oder weniger schematisch dargestellten Abschnitt einer Nokkenwelle, mit einer Wellenachse 40 und einem hierzu konzentrischen zylindrischen Wellenabschnitt 20. Dieser zylindrische Wellenabschnitt 20 wird zunächst unabhängig von der Nockenkontur durch Drehen oder Fräsen hergestellt.

Beiderseits des zylindrischen Wellenabschnittes 20 sind Nocken 30 dargestellt, die in ihrem Profil zueinander spiegelbildlich, im übrigen jedoch identisch ausgebildet sind, allerdings in entgegengesetzten Richtungen zur Wellenachse 40 in radialer Richtung versetzt sind.

Die Nocken 30 können in der axialen Draufsicht kreisförmig sein, sie können jedoch auch eine andere Umrißkontur haben. Die Nocken 30 bestehen aus einem zylindrischen Hauptabschnitt 35, dessen Kanten beiderseits entlang von Fasenflächen 37 abgeschrägt sind. Auf einer Seite setzt an die Fase 37 noch jeweils ein zylindrischer Abschnitt 36 an, der einen etwas kleineren Durchmesser hat als der zylindrische Hauptabschnitt 35 und der auch kürzer ist. Im Falle nicht-zylindrischer Nokken ist die in Figur 1 erkennbare Kontur dieselbe und die Abschnitte 36 und 35 haben dann dieselbe, nicht-zylindrische Kontur jeweils mit derselben Abstufung bzw. Durchmesserdifferenz.

Es versteht sich, daß die Nockenwelle im allgemeinen mehr als zwei Nocken und mehr als einen zylindrischen Abschnitt aufweist und man kann sie sich in beiden Richtungen entsprechend verlängert und ergänzt vorstellen. Dabei können die einzelnen Nocken 30 auch in unterschiedlichen Richtungen gegenüber der Wellenachse 40 exzentrisch versetzt sein.

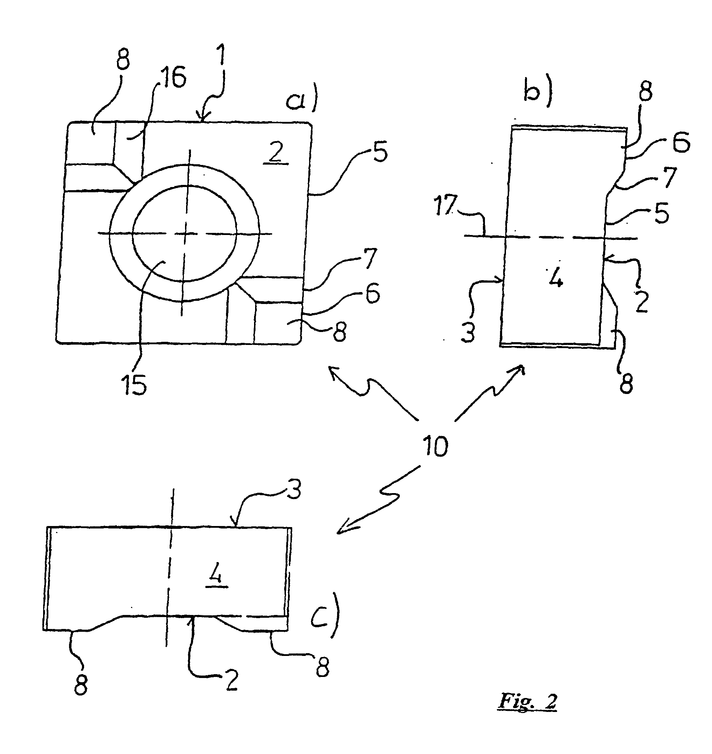

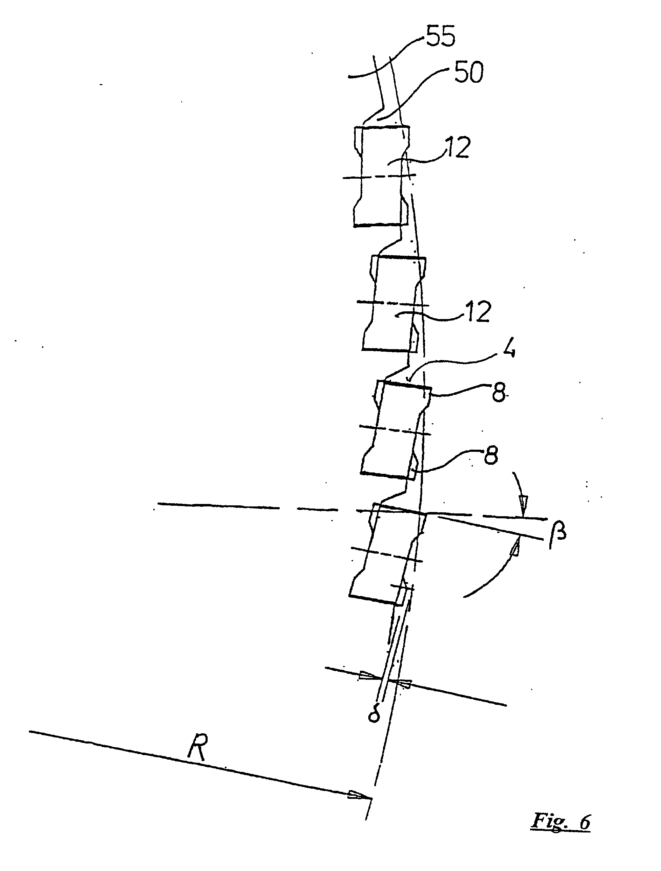

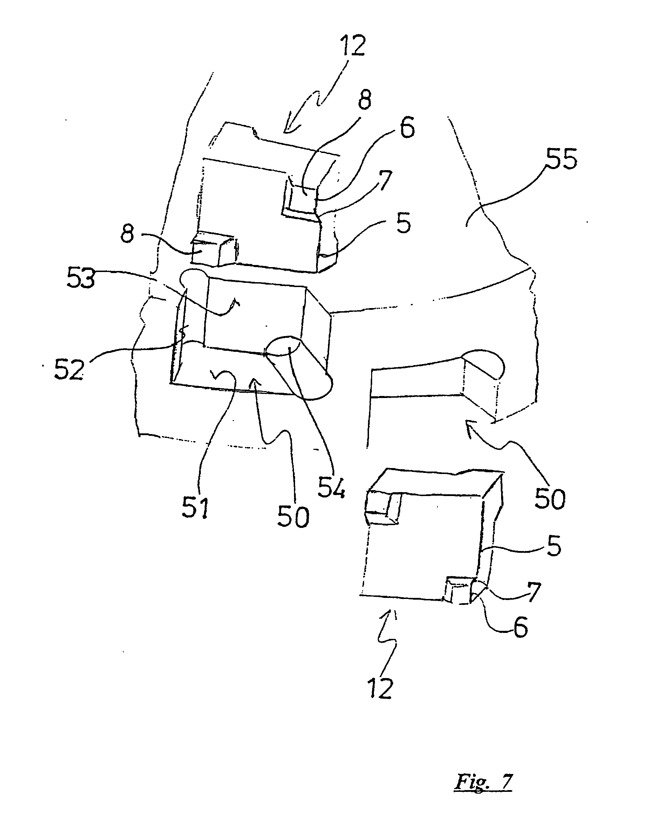

Die vorstehend beschriebene Nockenkontur tritt bei Nockenwellen sehr häufig und regelmäßig wiederkehrend auf. Herkömmlich konnte diese Kontur nur mit mehreren verschiedenen Schneideinsätzen und oftmals nur in mehreren Arbeitsgängen mit getrennten Fräsern hergestellt werden. Die Verwendung der Schneideinsätze gemäß der vorliegenden Erfindung, wie sie beispielhaft in den Figuren 2 bis 5 dargestellt sind, in Verbindung mit einem Scheibenfräser wie er schematisch in den Figuren 6 und 7 wiedergegeben ist, ermöglicht nunmehr die Herstellung der dargestellten Kontur in einem einzigen Arbeitsgang mit einem einzigen Fräswerkzeug und einem einzigen Typ von Schneideinsätzen. Beispielhaft ist in Figur 1 die Kontur zweier spiegelbildlich zueinander angeordneter Schneideinsätze 12 dargestellt, wobei Teile der gemeinsamen Schneidkantenkontur beider Schneideinsätze 12 genau das gewünschte Profil des Nockens 30 erfassen bzw. erzeugen. Die spiegelbildliche Anordnung zweier solcher Schneideinsätze 12 erreicht man einfach durch Verdrehung eines Schneideinsatzes um seine zentrale Achse um 90°, wie später noch beschrieben wird.

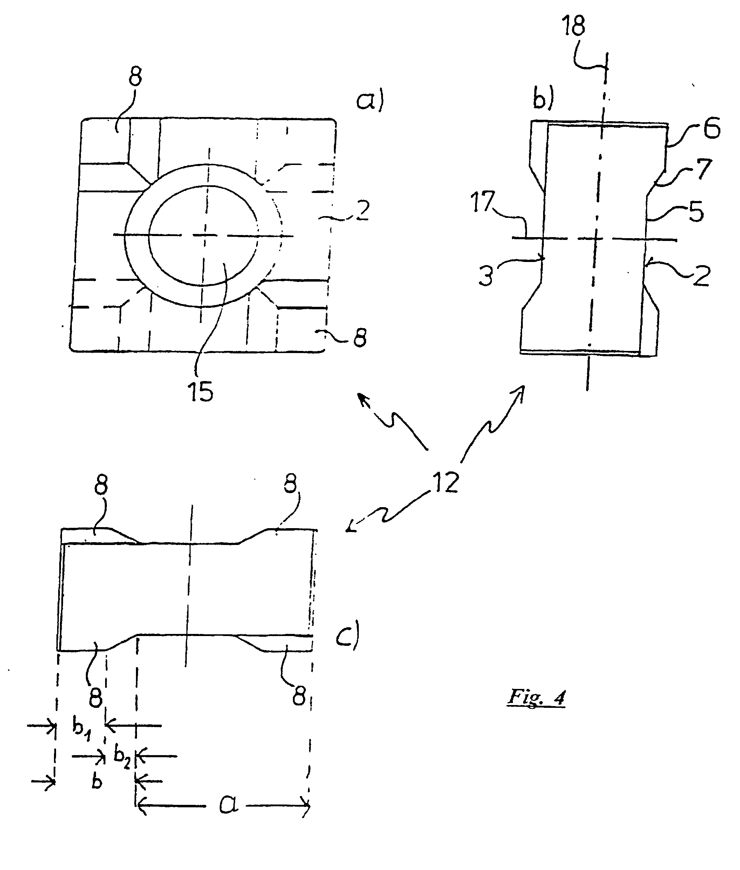

Der zylindrische Hauptabschnitt 35 hat ein axiale Länge a', die im Prinzip beliebig variiert werden kann, solange sie nur kleiner ist als die Summe der Längen a der beiden geraden Schneidkantenabschnitte 5 zweier Schneideinsätze 12 (siehe Figur 4c).

In Figur 2 ist als ein erstes Ausführungsbeispiel ein Schneideinsatz 10 dargestellt, wie er zur Erzeugung entsprechender Konturen verwendet werden kann. Der Schneideinsatz 10 besteht aus einem im wesentlichen quaderförmigen Hauptteil 1 mit einer oberen Fläche 2 und einer unteren Fläche 3, die im wesentlichen parallel zueinander und quadratisch ausgebildet sind. An zwei diagonal gegenüberliegenden Ecken der oberen Fläche 2 sind erhabene Bereiche ausgebildet, deren Oberfläche im wesentlichen parallel, jedoch versetzt zu der oberen Fläche ist, wobei schräg verlaufende Übergangsflächen 16 den Übergang von der oberen Fläche 2 zu der Oberfläche des erhabenen Bereiches 8 bilden. in der Mitte des quaderförmigen Hauptteiles 1 (in Figur 2a) erkennt man noch eine zentrale Befestigungsbohrung 15, die in ihrem oberen Bereich zur Aufnahme eines Schraubenkopfes konisch erweitert ist.

Schneidkantenabschnitte 5, 6 und 7 werden gebildet durch den Übergang zwischen den jeweiligen Seitenflächen 4 und der oberen Fläche 2 bzw. zu dem daran vorgesehenen erhabenen Abschnitt 8 und den Übergangsflächen 16. Den Profilverlauf der Schneidkantenabschnitte 5, 6 und 7 erkennt man am besten in Figur 2b), die eine Ansicht auf den in Figur 2a) dargestellten Schneideinsatz von links ist. Dabei ist zu beachten, daß der unten in Figur 2b) erkennbare erhabene Bereich 8 gegenüber der Papierebene nach hinten versetzt ist, so daß das Schneidkantenprofil 5, 6 und 7 in etwa der Hälfte des in Figur 1 dargestellten Profiles entspricht. Die andere Hälfte dieses Profiles erhält man einfach dadurch, daß man den Schneideinsatz um die zentrale Achse 17 um 90° verdreht, wobei dann eine benachbarte Seitenfläche 4 entsprechende Schneidkantenabschnitte mit der Oberseite 2 des Schneideinsatzes bzw. mit dem erhabenen Bereich und der Übergangsfläche bildet, so daß insgesamt das zu Figur 2b) an der Achse 17 gespiegelte Profil erscheint, wobei der Arbeitsbereich der Schneidkantenabschnitte 5 mehr oder weniger überlappt wenn die Bedingung a' < 2a erfüllt ist.

In Verbindung mit Figur 6 wird später noch erläutert werden, wie durch entsprechendes Verkippen der Schneideinsätze 10, 11 oder 12 sichergestellt wird, daß nur die jeweils vorn liegenden Schneidkantenabschnitte 5, 6 und 7 mit der Oberfläche des herzustellenden Nockens in Eingriff kommen, während der weiter hinten befindliche zweite erhabene Eckbereich 8 dieses Schneideinsatzes nicht mit der Werkstückoberfläche in Berührung kommt, solange dieser erhabene Eckbereich nicht in eine aktive Position gedreht wird.

Im Gegensatz zu herkömmlichen Schneideinsätzen ist jedoch im vorliegenden Fall die Spanfläche nicht etwa die Oberfläche 2, sondern vielmehr laufen die Späne beim erfindungsgemäßen Gebrauch entsprechender Schneideinsätze auf den Seitenflächen 4 ab, während die Oberfläche 2, ebenso wie die obere Seite des erhabenen Bereichs 8 und die entsprechende Übergangsfläche 16 jeweils Freiflächen bilden.

Dabei hat der Schneideinsatz, wenn man vermeiden will, daß der jeweils hintere erhabene Bereich nicht mit der Werkstückoberfläche in Eingriff kommt, eine sogenannte negative Schneidgeometrie, d.h. die an die Schneidkante angrenzende Spanfläche, die von einer der Seitenflächen 4 gebildet wird, bildet einen negativen Spanwinkel gegenüber einer Senkrechten zu der erzeugten Werkstückoberfläche.

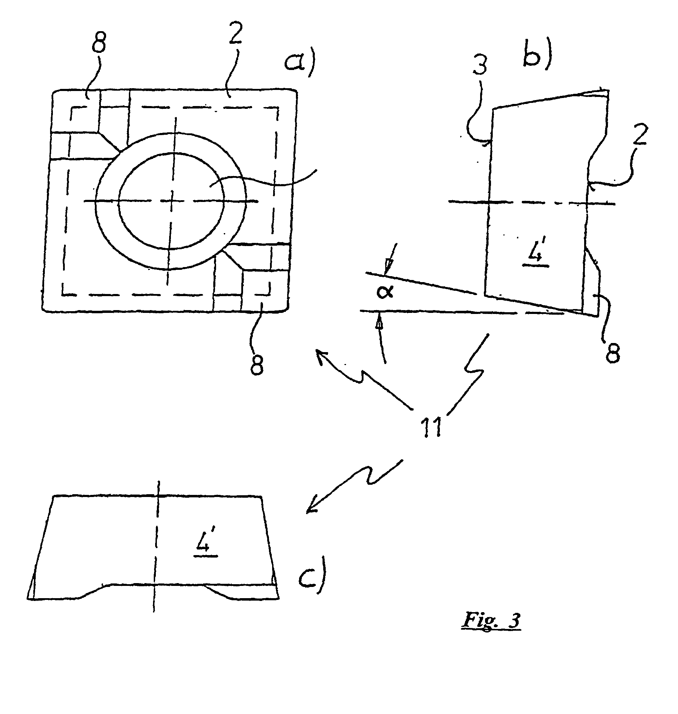

In Figur 3 ist ein Schneideinsatz dargestellt, bei welchem die untere Fläche 3 kleiner ist als die obere Fläche 2, an deren Übergang zu den Seitenflächen 4' die Schneidkanten gebildet werden. Aufgrund dieser Tatsache sind die Seitenflächen 4' gegenüber der oberen Fläche 2 und der unteren Fläche 3 um einen Neigungswinkel α geneigt und definieren insgesamt die Fläche eines Pyramidenstumpfes (siehe Figur 3c), die eine Ansicht von oben auf den in Figur 3a) dargestellten Schneideinsatz 11 wiedergibt).

Dabei muß, um eine positive Schneidgeometrie zu erhalten, der Winkel α größer sein als ein später noch zu beschreibender Verkippungswinkel β, durch welchen sichergestellt wird, daß der jeweils hintere erhabene Bereich 8 nicht mit der Werkstückoberfläche in Eingriff tritt.

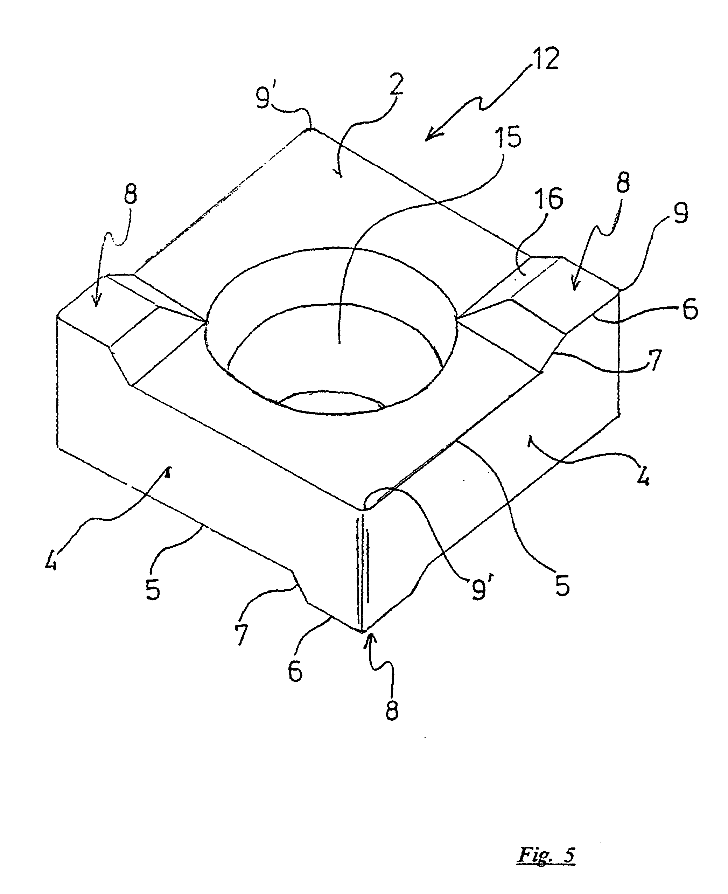

In den Figuren 4 und 5 ist ein Schneideinsatz 12 dargestellt, bei welchem die obere Fläche 2 und die untere Fläche 3 im wesentlichen identisch ausgebildet sind. Dabei entspricht die obere Fläche 2 exakt der in Figur 2 dargestellten oberen Fläche 2, während die untere Fläche 3 genau dieselbe Struktur hat und sich insofern von der unteren Fläche 3 des in Figur 2 dargestellten Schneideinsatzes unterscheidet. Für den Einsatz beim Fräsen eines Nockenprofils kommt immer nur ein Satz von Schneidkantenabschnitten 5, 6 und 7 mit der Werkstückoberfläche in Eingriff. Insgesamt stehen an dem Schneideinsatz 12 acht solcher Schneidkantensätze zur Verfügung, und zwar jeweils vier mit einer gegebenen Orientierung der erhabenen Abschnitte 8 relativ zu den übrigen Bereichen. Beispielsweise erhält man die Ansicht gemäß Figur 4b) auch dadurch, daß man den Schneideinsatz 12 um die Achse 17 und um die Achse 18 jeweils um 180° dreht, was jedesmal zu derselben Ansicht gemäß Figur 4b) führt, die somit in vier verschiedenen Stellungen (mit jeweils vier verschiedenen Sätzen aktiver Schneidkantenabschnitte 5, 6, 7) des Schneideinsatzes zu erreichen ist. Die hierzu spiegelbildliche Anordnung, bei welcher die in Figur 4b) unten rechts und unten links erkennbaren, erhabenen Bereiche nicht hinten, sondern vom liegen und umgekehrt die erhabenen Bereiche 8, die oben rechts und unten links erkennbar sind, hinter der Papierebene liegen, erhält man durch Verdrehen um die Achse 17 um 90°, woraufhin dann wiederum dieselbe Ansicht reproduzierbar ist durch Verdrehen um 180° um die Achse 17 oder die Achse 18 oder um beide.

Dabei entspricht Figur 4b) einer Ansicht auf Figur a) von links und Figur 4c) entspricht der Ansicht auf Figur 4a) von oben.

Es versteht sich, daß aufgrund der identischen Ausbildung der oberen Fläche 2 mit der unteren Fläche 3 auch die kegelförmige Einsenkung der Befestigungsbohrung 15 von beiden Seiten her vorgesehen ist.

Wie man außerdem in Figur 4a) - c) erkennt, sind die erhabenen Bereiche 8 auf der Unterseite 3 gegenüber den erhabenen Bereichen 8 an der Oberseite 2 an den um 90° versetzten diagonal gegenüberliegenden Ecken des in der Draufsicht quadratischen Schneideinsatzes 12 angeordnet. Sie könnten jedoch ohne weiteres auch jeweils an denselben Ecken angeordnet sein, ohne daß das den Gebrauch dieser Schneideinsätze 12 in irgendeiner Weise beeinträchtigen würde.

In Figur 5 ist der in Figur 4 gezeigte Schneideinsatz nochmals in einer perspektivischen Ansicht dargestellt, ohne daß hier jedoch eine maßstabsgetreue Wiedergabe eines solchen Schneideinsatzes beabsichtigt ist. Deutlich erkennt man an dieser perspektivischen Darstellung, daß je nach Orientierung des Schneideinsatzes und durch Verdrehen um 90° um eine durch die Bohrung 15 verlaufende Achse (hier nicht dargestellt) die relative Orientierung zwischen den Schneidkantenabschnitten 5 und 6 ausgetauscht werden kann, so daß man bei zwei hintereinander angeordneten Schneideinsätzen ohne weiteres das in Figur 1 dargestellte Profil abdecken kann.

In Figur 6 ist ein Scheibenfräser mit einer Reihe von daran angeordneten Schneideinsätzen 12 dargestellt. Das Fräswerkzeug ist eine relativ große, zylindrische Scheibe 55 mit Aufnahmetaschen 50 für die einzelnen Schneideinsätze 12. Die prinzipielle Ausgestaltung der Aufnahmetaschen 50 ergibt sich aus Figur 7. Mit R ist der Radius bezeichnet, welcher die zylindrische Kontur 35 eines Nockens 30 erzeugen soll, d.h. die radiale Lage des Schneidkantenabschnittes 5, der sich parallel zur Achse des Scheibenfräsers 55 erstreckt. Dementsprechend stehen die erhabenen Bereiche 8 mit den Schneidkantenabschnitten 6 in radialer Richtung etwas über diesen Radius R hervor, wobei der Schneidkantenabschnitt 7 die Verbindung der Abschnitte 5 und 6 herstellt.

Wie man weiterhin in Figur 6 erkennt, sind die Schneideinsätze 12 gegenüber der Umfangsoberfläche der zylindrischen Scheibe 55 (oder anders gesprochen gegenüber einer zum jeweiligen Radiusvektor senkrechten Ebene) um einen Winkel β verkippt, der sicherstellt, daß der jeweils hintere, erhabene Eckbereich 8 innerhalb des Radius R liegt, der durch den Schneidkantenabschnitt 5 geschnitten wird. In der hier dargestellten Orientierung rotiert die zylindrische Scheibe 55 entgegen dem Uhrzeigersinn um eine zur Papierebene senkrechte Achse, von welcher der Radiusvektor R ausgeht.

Wenn man anstelle der Schneideinsätze 12 die positiven Schneideinsätze 11 verwendet, ist darauf zu achten, daß dieser Verkippungswinkel β kleiner ist als der in Figur 3 angegebene Neigungswinkel α der Seitenflächen 4' zur oberen Fläche 2 des Schneideinsatzes 11, wenn man eine positive Schneidengeometrie sicherstellen will.

Bei der in Figur 6 dargestellten Orientierung ist die beispielhaft an einem der Schneideinsätze 12 mit der Bezugszahl 4 gekennzeichnete Seitenfläche die Spanfläche der gerade aktiven Schneidkantenabschnitte 5, 6 und 7, die im wesentlichen senkrecht zur Papierebene verlaufen.

Es versteht sich, daß die Aufnahmetaschen 50 für die einzelnen Schneideinsätze so ausgestaltet sind, daß die entstehenden Späne leicht abgeführt werden können.

Ein Ausschnitt aus einem Scheibenfräser 55 mit den entsprechenden Aufnahmetaschen 50 ist schematisch nochmals in Figur 7 wiedergegeben, zusammen mit den darüber bzw. darunter dargestellten und jeweils darin anzuordnenden Schneldemsatzen 12 in der jeweils erforderlichen Orientierung. Die Aufnahmetaschen 50 weisen im wesentlichen drei senkrecht zueinander stehende Seitenwände 51, 52 und 53 auf, wobei die Seitenwande 51 und 52 mit zwei benachbarten Seitenflächen 4 eines Schneideinsatzes 12 in Eingriff treten, während die Seitenfläche 52 mit einer Oberseite 2 oder Unterseite 3 des Schneideinsatzes 12 in Eingriff tritt. Nicht dargestellt sind in diesem Fall die Befestigungsbohrungen 15 der Schneideinsatze 12 und die entsprechenden Gewindebohrungen, die in den Wänden 53 vorgesehen sind

Wie man außerdem erkennt, ist die Fläche 53 noch mit einer zusätzlichen Aussparung 54 versehen, in welcher der jeweils in diesem Bereich vorhandene Eckbereich 8 des Schneideinsatzes 12 aufnehmbar ist. Die Aussparung 54 wird zweckmäßigerweise durch eine entsprechende Bohrung hergestellt, die - ungeachtet der nicht maßstabsgetreuen Darstellung in Figur 7 - auf jeden Fall so bemessen ist daß der dort liegende, erhabene Eckbereich 8 auf jeden Fall vollständig in der Aussparung 54 aufnehmbar ist. Auch die Ecke am Übergang der Flächen 52/53 ist freigebohrt. Je nach der Tiefe der Aufnahmetaschen 50, d.h. insbesondere dem axialen Maß der Wände 52 und 53, kann auch im diagonal gegenüberliegenden oberen Bereich der Wand 53 eine entsprechende Aufnahmetasche für den dort vorhandenen erhabenen Eckbereich 8 einer der Seiten des Schneideinsatzes 12 vorgesehen sein. Wenn der Schneidkantenabschnitt 5 jedoch länger ist als der axialen Länge der Wände 52 und 53 entspricht, so kommt dieser Eckbereich nicht mit der Wand 53 in Eingriff.

Wie man außerdem anhand der Figur 7 erkennen kann, verläuft die Rückwand 53 der Aufnahmetasche etwas geneigt zur Umfangsoberfläche der zylindrischen Scheibe 55 und entsprechend verläuft auch die Rückwand 52 geneigt zu einer Ebene, die von einem Radiusvektor und der Achse der Scheibe 55 aufgespannt wird, um sicherzustellen, daß, bei dem oben dargestellten Schneideinsatz 12, der unten links erkennbare erhabene Eckbereich 8 radial innerhalb des vom rechts erkennbaren Schneidkantenabschnittes 5 liegt. Entsprechendes gilt auch für den unten rechts dargestellten Schneideinsatz, bei dem auch der oben links erkennbare Eckbereich 8 radial innerhalb des rechts erkennbaren Schneidkantenabschnittes 5 liegen muß, und zwar um eine Maß δ, wie es in Figur 6 anschaulich dargestellt ist.

Es versteht sich, daß die Aufnahme- und Halteeinrichtungen für die Schneideinsätze 10, 11 oder 12 auch abweichend ausgestaltet werden können und insbesondere so, daß die einzelnen Schneideinsätze justierbar, d.h. in ihrer radialen, vor allem aber in ihrer axialen Lage einstellbar sind (bezogen auf die Achse des Scheibenfräsers 55). Durch axiale Verstellung der Schneideinsätze ändert man das Maß a' des Nockens 30, wobei das Einstellmaß im Prinzip zwischen dem Wert Null und maximal dem Wert 2a variieren kann, wobei a der Länge des Schneidkantenabschnittes 5 entspricht.

Bevorzugt ist jedoch immer eine gewisse Überlappung der Schneidkantenabschnitte 5 der beiden auf verschiedenen Seiten des Scheibenfräsers 55 angeordneten Schneideinsätze 12. Insbesondere können deren Schneidkanten in den Eckbereichen, an den Ecken 9', an welchen jeweils benachbarte Schneidkantenabschnitte 5 aneinanderstoßen, etwas abgeschrägt oder abgesenkt sein, da dieser Bereich immer von einem damit überlappenden Bereich des nächstfolgenden Schneideinsatzes geschnitten wird.

Befestigt werden die Schneideinsätze über Senkkopfschrauben, die durch die Befestigungsbohrung 15 hindurchgreifen und in entsprechende Gewinde in der Wand 53 einer Aufnahmetasche 50 oder in einer entsprechenden sonstigen Aufnahmeeinrichtung eingeschraubt sind. Eine Besonderheit der erfindungsgemäßen Schneideinsätze 10, 11 und 12 liegt dabei darin, daß die Achse der Befestigungsbohrung 15 nicht durch die Spanflächen hindurch, sondern im wesentlichen parallel zu den Ebenen der Spanflächen verläuft, die in diesem Fall mit den Seitenflächen 4 bzw. 4' identisch sind. Dies ermöglicht eine relativ einfache Befestigung in in etwa radialen Bohrungen am Umfang des Scheibenfräsers bzw. am Grund der Flächen 53 in den Aufnahmetaschen 50, da die Achse der Befestigungsbohrung 15 im wesentlichen parallel zu den Seitenflächen bzw. Spanflächen 4, 4' also etwa in radialer Richtung verläuft. Dies ermöglicht die Anordnung der Schneideinsätze in sehr enger Teilung, d.h. in sehr kurz aufeinanderfolgenden Abständen. Da dementsprechend mehr Schneideinsätze am Umfang eines Scheibenfräsers mit gegebenem Durchmesser angeordnet werden können, wird hierdurch die Effizienz (d. h. die Fräsleistung) des Fräswerkzeuges erheblich gesteigert.

## Patentansprüche

1. Schneideinsatz für Nockenwellenfräser, bestehend aus einem im wesentlichen quaderförmigen Schneidkörper (1) mit einer oberen Fläche (2) und einer hierzu im wesentlichen parallelen unteren Fläche (3), vier Seitenflächen (4, 4') und Schneidkanten (5, 6, 7), die entlang der Schnittlinien der Seitenflächen (4, 4') mit der oberen Fläche (2) und/oder der untere Fläche (3) gebildet werden, **dadurch gekennzeichnet, daß** die obere Fläche (2) und/oder die unteren Fläche (3) an diagonal gegenüberliegenden Ecken erhabene Eckbereich (8) aufweisen, die über die Ebene der oberen bzw. unteren Fläche (2, 3) hervorstehen und sich bis zu den Seitenflächen (4, 4') erstrekken, so daß die Schneidkanten (5, 6, 7) mindestens teilweise durch die Schnittlinie der Seitenflächen (4, 4') mit der Fläche der erhabenen Eckbereiche (8) gebildet werden.

2. Schneideinsatz nach Anspruch 1, **dadurch gekennzeichnet, daß** die Oberflächen der Eckbereiche (8) im wesentlichen parallel zu der Ebene der oberen bzw. unteren Fläche (2, 3) des Schneideinsatzes angeordnet sind und über geneigte Übergangsflächen (16) in die obere Fläche (2) bzw. untere Fläche (3) übergehen.

3. Schneideinsatz nach Anspruch 1 oder 2, **dadurch gekennzeichnet, daß** die Schneidkanten (5, 6, 7) durch die Schnittlinie der Seitenflächen (4, 4') mit sowohl der oberen Fläche (2) oder der unteren Fläche (3) als auch mit der Oberfläche der erhabenen Eckbereiche (8) als auch, falls vorhanden, mit den Übergangsflächen (16) gebildet werden.

4. Schneideinsatz nach einem der Ansprüche 1 bis 3, **dadurch gekennzeichnet, daß** er in der Draufsicht auf die obere Fläche (2) bzw. die untere Fläche (3) quadratisch erscheint.

5. Schneideinsatz nach einem der Ansprüche 1 bis 4, **dadurch gekennzeichnet, daß** die erhabenen Abschnitte im wesentlichen spiegelsymmetrisch bezüglich mindestens einer Diagonalen durch die obere Fläche (2) bzw. untere Fläche (3), vorzugsweise spiegelsymmetrisch bezüglich beider Diagonalen durch die betreffende Fläche (2, 3) ausgebildet sind.

6. Schneideinsatz nach einem der Ansprüche 1 bis 5, **dadurch gekennzeichnet, daß** die durch die Seitenflächen (4, 4') und die erhabenen Bereiche (8) sowie die Übergangsflächen (16) gebildeten Schneidkantenabschnitte (6, 7) beiderseits einer Schneidekke (9) gleich lang ausgebildet sind.

7. Schneideinsatz nach einem der Ansprüche 1 bis 6, **dadurch gekennzeichnet, daß** die Seitenflächen (4, 4') als Spanflächen vorgesehen sind.

8. Schneideinsatz nach einem der Ansprüche 1 bis 7, **dadurch gekennzeichnet, daß** gegenüberliegende Seitenflächen im wesentlichen parallel zueinander verlaufen und daß erhabene Eckbereiche (8) an diagonal gegenüberliegenden Ecken sowohl der oberen Fläche (2) als auch der unteren Fläche (3) vorgesehen sind, wobei Schneidkanten entlang der Schnittlinien sowohl der oberen Flächen (2) als auch der unteren Flächen (3) einschließlich der jeweiligen erhabenen Eckbereiche (8) mit den jeweiligen Seitenflächen gebildet werden.

9. Schneideinsatz nach einem der Ansprüche 1 bis 8, **dadurch gekennzeichnet, daß** die Seitenflächen (4') gemeinsam die Form eines Pyramidenstumpfes bilden, in der Weise, daß die obere Fläche (2) größer als die untere Fläche (3) ist, wobei Schneidkanten (5, 6, 7) nur an dem Übergang der Seitenflächen (4') zu der oberen Fläche (2) vorgesehen sind.

10. Scheibenfräser, insbesondere zur Herstellung von Nockenwellen oder Kurbelwellen, bestehend aus einem Hauptteil in Form einer Zylinderscheibe (55), entlang deren Umfang Einrichtungen (50) zur Aufnahme und Befestigung von Schneideinsätzen (10, 11, 12) vorgesehen sind, **dadurch gekennzeichnet, daß** die Einrichtungen für die Aufnahme von Schneideinsätzen für die Aufnahme von Schneideinsätzen (10, 11, 12) nach einem der Ansprüche 1 bis 9 ausgestaltet sind.

11. Scheibenfräser nach Anspruch 10, **dadurch gekennzeichnet, daß** die Aufnahmeeinrichtungen Aufnahmetaschen (50) aufweisen, die aus mindestens drei jeweils rechtwinklig zueinander angeordneten Wänden (51, 52 53) bestehen, von denen eine Wand (52) in etwa parallel zu einer durch die Achse und den zur Aufnahmeeinrichtung weisenden Radiusvektor aufgespannten Ebene verläuft, eine Wand (51) in etwa senkrecht zur Zylinderachse verläuft und die dritte Fläche (53) in etwa senkrecht zu einem Radiusvektor (R) zu der Aufnahmeeinrichtung verläuft, und daß die dritte Fläche (53), welche in etwa senkrecht zu dem zugehörigen Radiusvektor verläuft, eine Aussparung (54) zur Aufnahme eines erhabenen Eckbereichs (8) eines Schneideinsatzes nach einem der Ansprüche 1 bis 9 aufweist.

12. Scheibenfräser nach einem der Ansprüche 10 oder 11, **dadurch gekennzeichnet, daß** die entlang des Umfangs der Zylinderscheibe (55) vorgesehenen Aufnahmeeinrichtungen (50) im Bereich einer Kante am Übergang einer Stimseite zur Umfangsfläche der Zylinderscheibe (55) vorgesehen sind.

13. Scheibenfräser nach Anspruch 12, **dadurch gekennzeichnet, daß** die Aufnahmeeinrichtungen zur Aufnahme von Schneideinsätzen entlang beider Kanten am Übergang von Umfangsfläche zu den beiden Stirnseiten der Zylinderscheibe (55) vorgesehen sind.

14. Scheibenfräser nach einem der Ansprüche 10 bis 13, **dadurch gekennzeichnet, daß** die Aufnahmeeinrichtungen für Schneideinsätze entlang des Umfanges der Zylinderscheibe (55) in gleichen Abständen vorgesehen sind.

15. Scheibenfräser nach Anspruch 14, **dadurch gekennzeichnet, daß** die entlang beider Kanten der Zylinderscheibe (55) in gleichmäßigen Abständen angeordneten Aufnahmeeinrichtungen in Umfangsrichtung gegeneinander versetzt sind.

16. Scheibenfräser nach Anspruch 15, **dadurch gekennzeichnet, daß** die Breite der Zylinderscheibe (55) derart auf die Länge der Schneidkanten (5, 6, 7) der Schneideinsätze (10, 11, 12) abgestimmt ist und die Tiefe der Aufnahmeeinrichtungen (50) in Axialrichtung der Zylinderscheibe (55) derart bemessen ist, daß die aktiven, im wesentlichen parallel zur Achsrichtung verlaufenden Schneidkantenabschnitte (5) der Schneideinsätze entlang der einen Kante der Zylinderscheibe (55) mit den Schneidkantenabschnitten (5) der Schneideinsätze entlang der anderen Kante der Zylinderscheibe (55) in axialer Richtung überlappen.

17. Scheibenfräser nach Anspruch 16, **dadurch gekennzeichnet, daß** die Aufnahmetaschen (50) derart ausgestaltet und die Schneideinsätze derart in den Aufnahmetaschen aufgenommen sind, daß die erhabenen Eckbereiche der Schneideinsätze (10,11,12) jeweils den radial und axial äußersten Schneidkantenbereich entlang beider Kanten der Zylinderscheibe (55) definieren.

## Claims

1. A cutting insert for camshaft milling cutters, comprising a substantially cuboidal cutting body (1) with an upper face (2) and a lower face (3) substantially parallel thereto, four side faces (4, 4,) and cutting edges (5, 6, 7) which are formed along the lines of intersection of the side faces (4, 4') with the upper face (2) and/or the lower face (3), **characterised in that** the upper face (2) and/or the lower face (3) have at mutually diagonally oppositely disposed corners raised corner regions (8) which project beyond the plane of the upper and lower faces (2, 3) respectively and which extend to the side faces (4, 4') so that the cutting edges (5, 6, 7) are at least partially formed by the line of intersection of the side faces (4, 4') with the face of the raised corner regions (8).

2. A cutting insert according to claim 1 **characterised in that** the surfaces of the corner regions (8) are arranged substantially parallel to the plane of the upper and lower faces (2, 3) respectively of the cutting insert and go into the upper face (2) and the lower face (3) respectively by way of inclined transitional faces (16).

3. A cutting insert according to claim 1 or claim 2 **characterised in that** the cutting edges (5, 6, 7) are formed by the line of intersection of the side surfaces (4, 4') with both the upper face (2) or the lower face (3) and also with the surface of the raised corner regions (8) and also, if present, with the transitional faces (16).

4. A cutting insert according to one of claims 1 to 3 **characterised in that** it is of a square configuration in plan onto the upper face (2) and the lower face (3) respectively.

5. A cutting insert according to one of claims 1 to 4 **characterised in that** the raised parts are of a substantially mirror-image symmetrical configuration with respect to at least one diagonal through the upper face (2) or the lower face (3) respectively, preferably of a mirror-image symmetrical configuration with respect to both diagonals through the face (2, 3) in question.

6. A cutting insert according to one of claims 1 to 5 **characterised in that** the cutting edge parts (6, 7) formed by the side faces (4, 4') and the raised regions (8) and the transitional faces (16) are of equal length on both sides of a cutting comer (9).

7. A cutting insert according to one of claims 1 to 6 **characterised in that** the side faces (4, 4') are in the form of rake faces.

8. A cutting insert according to one of claims 1 to 7 **characterised in that** mutually oppositely disposed side faces extend in substantially mutually parallel relationship and that raised corner regions (8) are provided at diagonally mutually opposite corners both of the upper face (2) and also the lower face (3), wherein cutting edges are formed along the lines of intersection both of the upper faces (2) and also of the lower faces (3) including the respective raised corner regions (8) with the respective side faces.

9. A cutting insert according to one of claims 1 to 8 **characterised in that** the side faces (4') jointly form the shape of a truncated pyramid, in such a way that the upper face (2) is larger than the lower face (3), wherein cutting edges (5, 6, 7) are provided only at the transition of the side faces (4') to the upper face (2).

10. A disc milling cutter, in particular for the production of camshafts or crankshafts, comprising a main portion in the form of a cylindrical disc (55), along the periphery of which are provided devices (50) for mounting and fixing cutting inserts (10, 11, 12), **characterised in that** the devices for mounting cutting inserts are equipped for mounting cutting inserts (10, 11, 12) according to one of claims 1 to 9.

11. A disc milling cutter according to claim 10 **characterised in that** the mounting devices have mounting pockets (50) which comprise at least three respectively mutually perpendicularly arranged walls (51, 52, 53), of which one wall (52) extends approximately parallel to a plane defined by the axis and the radius vector facing towards the mounting device, a wall (51) extends approximately perpendicularly to the axis of the cylinder, and the third face (53) extends approximately perpendicularly to a radius vector (R) to the mounting device, and the third face (53) which extends approximately perpendicularly to the associated radius vector has an opening (54) for receiving a raised comer region (8) of a cutting insert according to one of claims 1 to 9.

12. A disc milling cutter according to one of claims 10 and 11 **characterised in that** the mounting devices (50) provided along the periphery of the cylindrical disc (55) are provided in the region of an edge at the transition of an end face to the peripheral surface of the cylindrical disc (55).

13. A disc milling cutter according to claim 12 **characterised in that** the mounting devices for mounting cutting inserts are provided along both edges at the transition from the peripheral surface to the two end faces of the cylindrical disc (55).

14. A disc milling cutter according to one of claims 10 to 13 **characterised in that** the mounting devices for cutting inserts are provided at equal spacings along the periphery of the cylindrical disc (55).

15. A disc milling cutter according to claim 14 **characterised in that** the mounting devices arranged at uniform spacings along both edges of the cylindrical disc (55) are displaced relative to each other in the peripheral direction.

16. A disc milling cutter according to claim 15 **characterised in that** the width of the cylindrical disc (55) is so matched to the length of the cutting edges (5, 6, 7) of the cutting inserts (10, 11, 12) and the depth of the mounting devices (50) in the axial direction of the cylindrical disc (55) is of such a dimension that the active cutting edge parts (5) of the cutting inserts, which cutting edge parts extend substantially parallel to the axial direction, along the one edge of the cylindrical disc (55), overlap in the axial direction with the cutting edge parts (5) of the cutting inserts along the other edge of the cylindrical disc (55).

17. A disc milling cutter according to claim 16 **characterised in that** the mounting pockets (50) are of such a configuration and the cutting inserts are accommodated in the mounting pockets in such a way that the raised corner regions of the cutting inserts (10, 11, 12) respectively define the radially and axially outermost cutting edge region along both edges of the cylindrical disc (55).

## Revendications

1. Insert de coupe pour fraiseuse d'arbre à cames, constitué par un corps de coupe (1) de forme sensiblement carrée et présentant une face supérieure (2) et une face inférieure (3), sensiblement parallèle à la précédente, quatre faces latérales (4, 4') et des arêtes de coupe (5, 6, 7) qui sont formées le long des lignes d'intersection des faces latérales (4, 4') avec la face supérieure (2) et/ou la face inférieure (3), **caractérisé en ce que** la face supérieure (2) et/ou la face inférieure (3) comportent au niveau de coins diagonalement opposés des zones de coin (8) en relief qui sont saillantes au-dessus du plan de la face supérieure ou inférieure (2, 3) et qui s'étendent jusqu'aux faces latérales (4, 4') de sorte que les arêtes de coupe (5, 6, 7) sont formées au moins partiellement par les lignes d'intersection des faces latérales (4, 4') avec la face des zones de coin (8) en relief.

2. Insert de coupe selon la revendication 1, **caractérisé en ce que** les surfaces des zones de coin (8) sont disposées sensiblement parallèlement au plan de la face supérieure ou inférieure (2, 3) de l'insert de coupe et se fondent via des faces de transition inclinées (16) dans la face supérieure (2) ou la face inférieure (3).

3. Insert de coupe selon la revendication 1 ou 2, **caractérisé en ce que** les arêtes de coupe (5, 6, 7) sont formées par la ligne d'intersection des faces latérales (4, 4') aussi bien avec la face supérieure (2) ou la face inférieure (3) qu'avec la surface des zones de coin (8) en relief et, si elles existent, les faces de transition (16).

4. Insert de coupe selon la revendication 1 à 3, **caractérisé en ce qu'**il semble avoir une forme carrée lorsque l'on observe la face supérieure (2) ou la face inférieure (3) en vue de dessus.

5. Insert de coupe selon l'une des revendications 1 à 4, **caractérisé en ce que** les portions en relief sont conformées sensiblement en symétrie de miroir par rapport au moins à une diagonale passant par la face supérieure (2) ou la face inférieure (3), de préférence en symétrie de miroir par rapport aux deux diagonales passant par ladite face (2, 3).

6. Insert de coupe selon l'une des revendications 1 à 5, **caractérisé en ce que** les portions d'arête de coupe (6, 7) formées par les faces latérales (4, 4') et les zones en relief (8) ainsi que par les faces de transition (16) sont conformées des deux côtés d'un coin de coupe (9) de façon à avoir la même longueur.

7. Insert de coupe selon l'une des revendications 1 à 6, **caractérisé en ce que** les faces latérales (4, 4') sont conformées en faces d'attaque.

8. Insert de coupe selon l'une des revendications 1 à 7, **caractérisé en ce que** des faces latérales opposées s'étendent sensiblement parallèlement entre elles, et **en ce que** des zones de coin (8) en relief sont prévues au niveau de coins diagonalement opposés aussi bien de la face supérieure (2) que de la face inférieure (3), des arêtes de coupe étant formées le long des lignes d'intersection aussi bien de la face supérieure (2) que de la face inférieure (3) y compris les zones de coin (8) en relief avec les faces latérales correspondantes.

9. Insert de coupe selon l'une des revendications 1 à 8, **caractérisé en ce que** les faces latérales (4') forment conjointement un cône tronqué à base pyramidale de façon que la face supérieure (2) est plus grande que la face inférieure (3), des arêtes de coupe (5, 6, 7) n'étant prévues qu'au niveau de la transition des faces latérales (4') à la face supérieure (2).

10. Fraiseuse à disque, en particulier pour la fabrication d'arbres à cames ou d'arbres à manivelle, constituée par une partie principale se présentant sous la forme d'un disque cylindrique (55), le long de la périphérie duquel sont prévus des dispositifs (50) destinés à recevoir et à fixer des inserts de coupe (10, 11, 12), **caractérisée en ce que** les dispositifs destinés à recevoir des inserts de coupe sont conformés en vue de recevoir des inserts de coupe (10, 11, 12) selon l'une des revendications 1 à 9.

11. Fraiseuse à disque selon la revendication 10, **caractérisée en ce que** les dispositifs de réception comportent des poches de réception (50) qui sont constituées par au moins trois parois (51, 52, 53), disposées à angle droit les unes par rapport aux autres, dont une paroi (52) s'étend sensiblement parallèlement à un plan passant par l'axe et le vecteur rayon dirigé vers le dispositif de réception, une paroi (51) s'étend sensiblement perpendiculairement à l'axe de cylindre et la troisième face (53) s'étend sensiblement perpendiculairement au vecteur rayon (R) dirigé vers le dispositif de réception, et **en ce que** la troisième face (53), qui s'étend sensiblement perpendiculairement au vecteur rayon associé, comporte un évidement (54) destiné à recevoir une zone de coin (8) en relief d'un insert de coupe selon l'une des revendications 1 à 9.

12. Fraiseuse à disque selon l'une des revendications 10 ou 11, **caractérisée en ce que** les dispositifs de réception (50) prévus le long de la périphérie du disque cylindrique (55) sont disposés au niveau d'une arête à la transition d'une face frontale à la face périphérique du disque cylindrique (55).

13. Fraiseuse à disque selon la revendication 12, **caractérisée en ce que** les dispositifs de réception destinés à recevoir des inserts de coupe sont prévus le long des deux arêtes à la transition de la face périphérique aux deux faces frontales du disque cylindrique (55).

14. Fraiseuse à disque selon l'une des revendications 10 à 13, **caractérisée en ce que** les dispositifs de réception pour les inserts de coupe sont prévus à égale distance le long de la périphérie du disque cylindrique (55).

15. Fraiseuse à disque selon la revendication 14, **caractérisée en ce que** les dispositifs de réception disposés à égale distance le long des deux arêtes du disque cylindrique (55) sont décalés les uns par rapport aux autres dans la direction périphérique.

16. Fraiseuse à disque selon la revendication 15, **caractérisée en ce que** la largeur du disque cylindrique (55) est adaptée à la longueur des arêtes de coupe (5, 6, 7) des inserts de coupe (10, 11, 12) et la profondeur des dispositifs de réception (50) est dimensionnée dans la direction axiale du disque cylindrique (55) de sorte que les portions d'arête de coupe (5) actives, s'étendant sensiblement parallèlement à la direction axiale, des inserts de coupe le long de l'une des arêtes du disque cylindrique (55) recouvrent les portions d'arête de coupe (5) des inserts de coupe le long de l'autre arête du disque cylindrique (55) dans la direction axiale.

17. Fraiseuse à disque selon la revendication 16, **caractérisée en ce que** les poches de réception (50) sont conformées, et les inserts de coupe sont reçus dans les poches de réception, de telle sorte que les zones de coin en relief des inserts de coupe (10, 11, 12) définissent chacune la zone d'arête de coupe radialement et axialement la plus extérieure le long des deux arêtes du disque cylindrique (55).
